# EUROPEAN PATENT APPLICATION

(11) **EP 1 659 091 A1**
(43) Date of publication of application: **24.05.2006**
(21) Application number: 04106017.9
(22) Date of filing: 23.11.2004
(51) Int. Cl.: B67B 7/18

(54) **Device for removing caps from test tubes**

(71) Applicant: Kordia B.V., 2312 RG LEIDEN (NL)
(72) Inventor: Kneppers, Job Leonardus, 2635 LC, DEN HOORN (ZH) (NL)
(74) Representative: Aalbers, Arnt Reinier

(57) **Abstract**

The invention pertains to a device (1) for removing caps (41) from test tubes (40) comprising a first set of grippers (7) for gripping a tube (40), a second set of grippers (8) for gripping a cap (41), and a drive (29; 19) for rotating and/or translating the first and second grippers (7, 8) relative to each other. At least one of the second grippers (8) comprises an eccentric portion (34), which is rotatable between at least a first retracted position and a second position for gripping a cap (41). The device according to the present invention can be built relatively compact and/or allows relatively straightforward and robust operation.

## Description

The invention pertains to a device for removing caps from test tubes comprising a first set of grippers for gripping a tube, a second set of grippers for gripping a cap, and a drive for rotating and/or translating the first and second grippers relative to each other.

Such a device is known, e.g. from European patent application 0 972 744. In this document, it is explained that analytical instruments should be as versatile as possible to minimize the number of different analytical instruments required at a single location, such as at a hospital or laboratory. It is therefore desirable to have an analytical instrument that handles test tubes of various types and sizes and both open ("uncapped") and closed ("capped") test tubes. Where the instrument requires the test tubes to be open before they are pretreated, sampled and tested, the instrument should have an automatic decapper to automatically decap closed test tubes.

It is further explained that automating the decapping of test tubes is complicated by the variety of available test tubes, which may vary in diameter, height, and especially the variety of available caps to cover the test tubes. Some caps unscrew from threading on the top of the test tubes, another type of cap is a rubber stopper inserted into a test tube, which is removed by a pulling motion. The caps may also differ in their composition - they may be rubber, plastic, etc. A single decapper that can decap all of these tubes is needed because it is impractical to provide separate decappers in a single instrument for each type of cap.

To meet these requirements, the decapper according to EP 0 972 744 has upper grippers, lower grippers and means for moving the lower grippers relative to the upper grippers to remove the cap from the test tube. The upper grippers comprise a rotatable disk, which has a plurality of arcuate slots, a plurality of retractable jaws coupled to the slots in the disk, and a means for rotating the disk to move the jaws. The rotating means causes the jaws to pivot to a gripping position to grip the cap during the decapping of the test tube and to pivot to a retracted position at other times.

It is an object of the present invention to provide an improved decapper, in particular one which can be built relatively compact and/or which allows more robust operation.

To this end, the decapper according to the present invention is characterized in that at least one, preferably all, of the second grippers comprises an eccentric portion, which is rotatable between at least a first retracted position and a second position for gripping a cap.

It is preferred that the second set of grippers is mounted in a housing, which in turn is rotatably mounted in the device and which is provided with a centre wheel, preferably a gear wheel, concentric with the axis of rotation of the housing, and wherein the at least one gripper is provided, on or near its end opposite the eccentric portion, with a planet wheel, preferably a gear wheel, which is operatively coupled to the centre wheel, such that by rotating the housing the eccentric portion of the at least one gripper can be rotated between the first and second positions.

It is further preferred that the housing is mounted in the device by means of a slip-action coupling. By employing a slip-action coupling, both gripping a cap and removing it from the tube can be achieved by rotating the housing in a single rotational direction. I.e. by rotating the housing in counter-clockwise (CCW) direction, the second grippers are rotated from the first (retracted or rest) position to the second position, gripping the cap and blocking further rotation of the grippers. When the grippers are blocked, the housing will continue its rotation thus unscrewing the cap. It is preferred that the torque at which the coupling will slip is adjustable so as to be able to set the force exerted by the grippers on the cap.

If the housing is provided with at least one stop, which determines the first (retracted or rest) position of the second gripper(s), the cap can be released by simply rotating the housing in reverse direction. I.e., it will not be necessary to measure the exact position of the housing by means of a flag or the like.

It is further preferred that the decapper comprises a drive for translating the sets of grippers relative to each other, while the first set of grippers is being rotated, thus enabling a combined unscrewing and pulling motion.

Although the second set of grippers may comprise e.g. two stationary elements and one rotatable element with an eccentric portion with which a cap can be firmly pushed against the stationary elements, it is preferred that the second set comprises three grippers, each of which comprises an eccentric portion rotatable between at least a first retracted position and a second position for gripping a cap.

The invention will now be explained in more detail with reference to drawings, which schematically depict a

### preferred embodiment.

Figure 1 is a front view of a decapper in accordance with the present invention.

Figures 2 and 3 are respectively front and rear views of the decapper shown in Figure 1, with the cover removed.

Figure 4 is a bottom view of a gripper, which is part of the decapper according to Figures 1-3.

Figures 5 and 6 are cross-sectional top and side views of the gripper according to Figure 4.

Figures 7A to 7C show the internals of the present decapper prior to the gripping of a tube.

Figures 8A to 8C show the internals of the present decapper during the gripping of a tube.

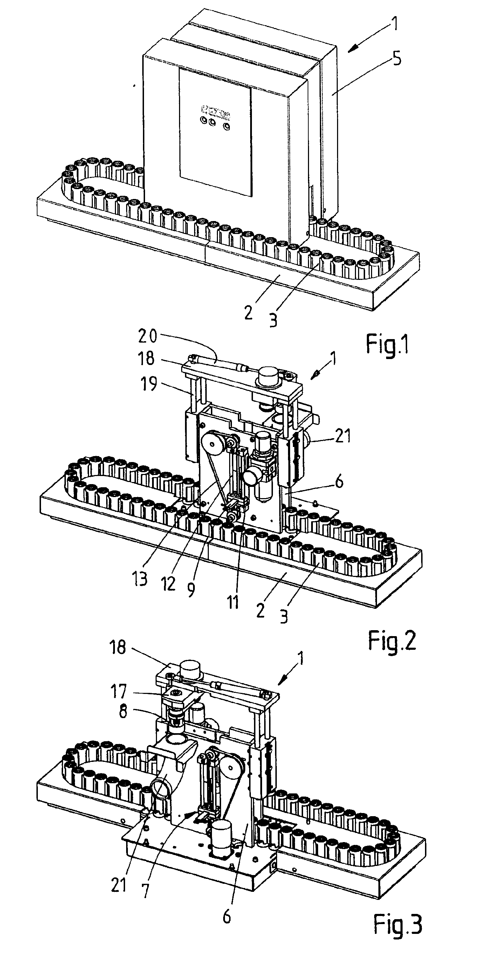

Figure 1 shows a decapper 1 according to the present invention comprising a machine bed 2 supporting an endless chain of receptacles 3 for various types of test tubes and a gripper assembly, hidden from view by a cover 5.

Figures 2 and 3 show the decapper 1 with the cover 5 removed, thus revealing a substantially vertical frame 6 supporting a first set of grippers 7 for gripping a tube, and a second set of grippers 8 for gripping a cap on a tube.

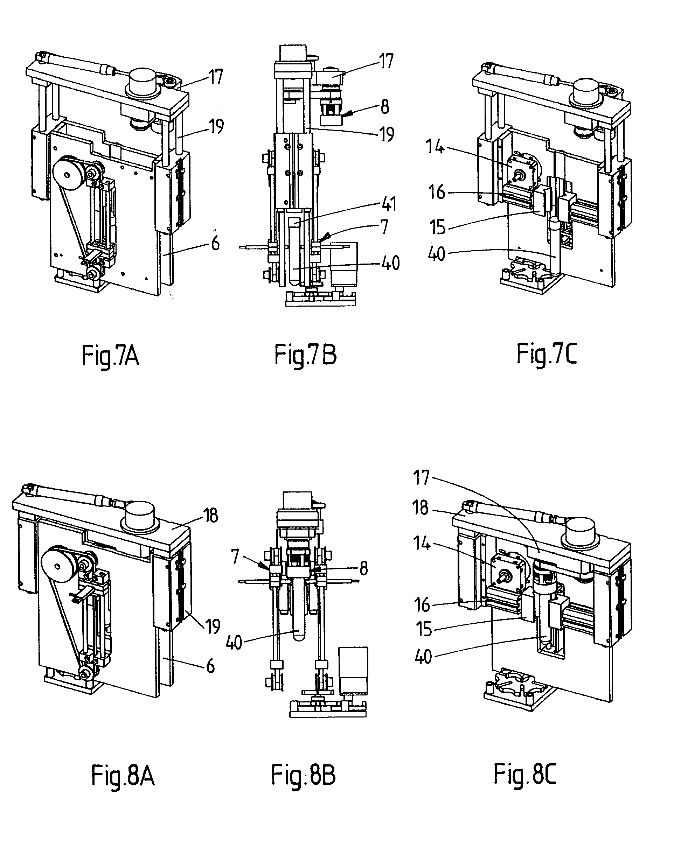

The first grippers 7 comprise two pneumatic cylinders 9, each comprising on its end facing the endless chain (or, when present, the test tubes) a V-shaped recess (shown in Figure 7C) for receiving a tube and mounted horizontally in a clamp 11, which, in turn, is slidably mounted on two vertical and parallel guides 12. Each of the clamps 11 can be moved, along the guides 12 and by means of a belt 13 and a electric motor 14 (shown in Figures 7C and 8C) from a first, lower position (Figures 7A - 7C) for gripping a tube from a receptacle 3 positioned in between the plates 9 to second, upper position (Figures 8A - 8C). The first grippers 7 further comprise two V-blocks 15, each comprising in a side wall facing the opposite bar a V-shaped recess (again shown in Figure 7C) for receiving a tube and each mounted vertically on a pneumatic cylinder 16.

The second grippers 8 are mounted on an arm 17, which is pivotably mounted on a substantially horizontal subframe 18, which in turn is mounted on the substantially vertical frame 6 by means of vertical pneumatic cylinders 19. The arm 17 can be pivoted, by means of a further pneumatic cylinder 20 connected to both the subframe 18 and the arm 17, between a first position (shown in Figs. 8A - 8C), wherein the grippers 8 are located over the endless chain of receptacles 3, and a second position (shown in Figs. 3 and 7A - 7C), wherein the grippers 8 are located over the inlet opening of a duct 21 for discharging removed caps, as will be explained below.

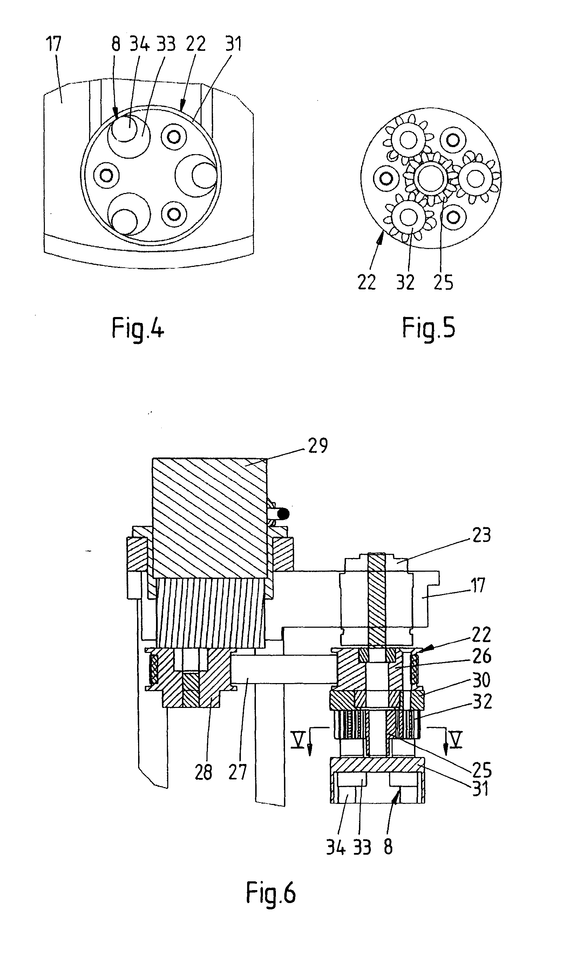

As is shown in Figs. 4 to 6, the second set of grippers 8 is rotatably mounted in a housing 22, which in turn is rotatably mounted in the arm 17 by means of a adjustable slip-action coupling 23. I.e. the housing 22 comprises a central axis 24, which is received, with one end, in the coupling 23 and which, on the other end is provided with a concentric gear wheel 25. The housing 22 further comprises a pulley 26, which is operatively connected via a drive belt 27 to a similar pulley 28 mounted on the axle of a motor 29, a circular support plate 30, a circular casing 31, and the actual grippers 8 rotatably mounted in both the plate 30 and the casing 31. Each of the grippers 8 comprises on its uppermost end an a planet gear wheel 32, which is operatively coupled to the concentric gear wheel 25, a concentric portion extending through the casing 31, a rotationally asymmetric, e.g. oval portion 33, and, mounted on this portion 33, an eccentric portion 34. This eccentric portion 34 is thus rotatable between at least a first retracted position (shown in Fig. 4), in which position the asymmetric portions 33 abut the inner wall of the casing 31, and a second position for gripping a cap.

During operation, various test tubes 40 from which the cap 41 is to be removed are placed in the receptacles 3. Upon starting the decapper 1, the endless chain of receptacles 3 is forwarded (transported) one position at a time until a receptacle 3 containing a test tube reaches the position in between the first grippers 7, more specifically in between the two cylinders 9 (Figs. 7A - 7C). These cylinders 9 are caused to move inwards, thus gripping the tube 40, and upwards in between the two V-blocks 15. By moving these V-blocks 15 inwards, the tube 40 is firmly gripped, preventing rotation of the tube 40 during later decapping. Subsequently, the arm 17 is retracted and the horizontal subframe 18 is lowered until the cap 41 on the tube 40 is positioned between the eccentric portions 34 of the second grippers 8. Upon activating the motor 29, the housing 22 is rotated in counter-clockwise (CCW) direction, causing the grippers 8 to rotate, also in CCW direction, from the first (retracted or rest) position to the second position, gripping the cap 41 and blocking further rotation of the grippers 8. When the grippers 8 are blocked, the housing 22 will continue its rotation and the substantially horizontal subframe 18 is moved upwards thus unscrewing and pulling off the cap 41. Upon removing the cap 41, the arm 17 is rotated outwardly until the grippers 8 are located over the inlet opening of the duct 21 and, at that point, the housing 22 is rotated clockwise, causing the grippers 8 to rotate from the second position to the first position thus releasing the cap 41, which then falls into the duct 21 and is thus discharged.

As will be clear from this example, the preferred decapper according to the present invention can be built relatively compact and/or allows relatively straightforward and robust operation.

The invention is not restricted to the above described embodiments which can be varied in a number of ways within the scope of the claims. For instance, the present decapper can be incorporated into an analytical instrument.

## Claims

1. Device (1) for removing caps (41) from test tubes (40) comprising a first set of grippers (7) for gripping a tube (40), a second set of grippers (8) for gripping a cap (41), and a drive (29; 19) for rotating and/or translating the first and second grippers (7, 8) relative to each other, **characterized in that** at least one of the second grippers (8) comprises an eccentric portion (34), which is rotatable between at least a first retracted position and a second position for gripping a cap (41).

2. Device (1) according to claim 1, wherein the second set of grippers (8) is mounted in a housing (22), which in turn is rotatably mounted in the device (1) and which is provided with a centre wheel (25) concentric with the axis of rotation of the housing (22), and wherein the at least one gripper (8) is provided, on or near its end opposite the eccentric portion (34), with a planet wheel (32), which is operatively coupled to the centre wheel (25), such that by rotating the housing (22) the eccentric portion (34) of the at least one gripper (8) can be rotated between the first and second positions.

3. Device (1) according to claim 2, wherein the housing (22) is mounted in the device (1) by means of a slip-action coupling (23).

4. Device (1) according to claim 3, wherein the torque at which the coupling (23) will slip is adjustable.

5. Device (1) according to any one of the preceding claims, wherein the housing (22) is provided with at least one stop (21), which determines the first (non-gripping) position of the second gripper(s) (8).

6. Device (1) according to any one of the preceding claims, which comprises a drive (19) for translating the sets of grippers (7, 8) relative to each other, while the second set of grippers (8) is being rotated.

7. Device (1) according to any one of the preceding claims, wherein the second set comprises three grippers (8), each of which comprises an eccentric portion (34) rotatable between at least a first retracted position and a second position for gripping a cap (41).
